**Europäisches Patentamt**

**European Patent Office**

**Office européen des brevets**

(11) Veröffentlichungsnummer : **0 497 732 A1**

(19)

(12) # EUROPÄISCHE PATENTANMELDUNG

(21) Anmeldenummer : **92810034.6**

(22) Anmeldetag : **21.01.92**

(51) Int. Cl.$^5$ : **B01D 46/42,** B01D 46/10, B01D 46/12, A47L 9/20

(30) Priorität : **30.01.91 CH 278/91**

(43) Veröffentlichungstag der Anmeldung : **05.08.92 Patentblatt 92/32**

(84) Benannte Vertragsstaaten : **AT DE**

(71) Anmelder : **WIELER & DURIAN ANLAGENTECHNIK GmbH Robert-Mayer-Strasse 10 W-7068 Urbach (DE)**

(72) Erfinder : **Schreiber, Rüdiger Panoramaweg 14/1 W-7062 Rudersberg (DE)** Erfinder : **Renz, Lukas Schwalbenweg 4 W-7060 Schorndorf (DE)**

(74) Vertreter : **Quehl, Horst Max, Dipl.-Ing. Patentanwalt Postfach 104 Ringstrasse 7 CH-8274 Tägerwilen (CH)**

(54) **Verfahren und Vorrichtung zum Entfernen von Partikeln aus einem Gasstrom.**

(57) Um die Filterscheibe (3) einer Vorrichtung zum Entfernen von Partikeln aus einem Gasstrom zu reinigen, wird über ihre Abströmseite mittels einer Düseneinrichtung (5) ein Gas- oder Flüssigkeitsstrahl geführt, während synchron dazu über die Zuströmseite eine Saugeinrichtung (10) bewegt wird, die die herausgeblasenen oder herausgespülten Verunreinigungen wegführt.

Fig. 2

Die Erfindung betrifft ein Verfahren zum Entfernen von Partikeln aus einem Gasstrom, wobei der Gasstrom durch eine quer zu ihm angeordnete Filterscheibe geführt wird sowie eine Vorrichtung zur Ausführung des Verfahrens.

Bekannte Verfahren und Vorrichtungen zur Ausführung eines Verfahrens der genannten Art haben den Nachteil, dass die Filterscheibe nach verhältnismässig kurzer Zeit durch aus dem Gasstrom abgefilterte Partikel ihre Gasdurchlässigkeit zunehmend verliert, bis sie ausgewechselt werden muss. Das Auswechseln ist arbeitsaufwendig und führt ausserdem zu einer Belastung von Abfallentsorgungsanlagen.

Um die Filterscheibe verstopfende Partikel aus ihr zu entfernen wurde bereits vorgeschlagen, kurzzeitig einen Gasstrom in entgegengesetzter Richtung strömen zu lassen und einer zweiten Reinigungseinrichtung zuzuführen. Die dabei erzielte Reinigungswirkung ist jedoch, insbesondere im Verhältnis zum erforderlichen apparativen Aufwand, unbefriedigend.

Der Erfindung liegt die Aufgabe zugrunde, ein Verfahren der genannten Art zu finden, durch das die genannten Nachteile vermieden werden und das folglich einen gering bleibenden Druckverlust an der Filtertscheibe gewährleistet und ein langdauernde Verwendung der Filterscheibe ermöglicht.

Die Lösung der genannten Aufgabe erfolgt erfindungsgemäss dadurch, dass von der Filterscheibe aufgenommene Feststoffpartikel durch mindestens einen entgegen der Richtung des zu reinigenden Gasstromes geführten Strahl eines flüssigen oder gasförmigen Mediums aus der Filterscheibe entfernt und durch eine in seiner Richtung auf der anderen Seite der Filterscheibe angeordnete Absaugeinrichtung fortgeführt werden, wobei mindestens eine den Strahl erzeugende Düseneinrichtung und die Absaugeinrichtung in geringem Abstand von der Filterscheibe über diese synchron bewegt werden. Für die Ausführung dieses Verfahrens wird eine Vorrichtung mit einer in einem Kanalstück quer zur Strömungsrichtung angeordneten Filterscheibe vorgeschlagen die erfindungsgemäss gekennzeichnet ist durch eine Reinigungseinrichtung, mit einer relativ zu der Filterscheibe abströmseitig angeordneten Düseneinrichtung für die Zufuhr eines Reinigungsmittels, die am Ende einer Schlauchleitung angeordnet ist und mit einer dieser gegenüberliegend auf der gegenüberliegenden Seite der Filterscheibe am Ende einer zweiten Schlauchleitung angeordneten Absaugeinrichtung, wobei die Düsen- und Absaugeinrichtung synchron über die Oberfläche der Filterscheibe beweglich sind.

Vorteilhafte Ausführungsformen des Verfahrens und der Vorrichtung sind Gegenstand der abhängigen Patentansprüche und der folgenden Beschreibung anhand der Zeichnungen zu entnehmen. Es zeigt:

Fig.1 eine Ansicht einer Vorrichtung in Richtung auf die Zuströmseite der Filterscheibe,

Fig.2 einen Schnitt durch die Vorrichtung nach Fig.1 garallel zur Kanal- bzw. Strömungsrichtung,

Fig.3 eine Ansicht einer zweiten Ausführungsform der erfindungsgemässen Vorrichtung in Richtung auf die Zuströmseite der Filterscheibe und

Fig.4 einen Schnitt durch die Vorrichtung nach Fig.3 parallel zur Strömungsrichtung.

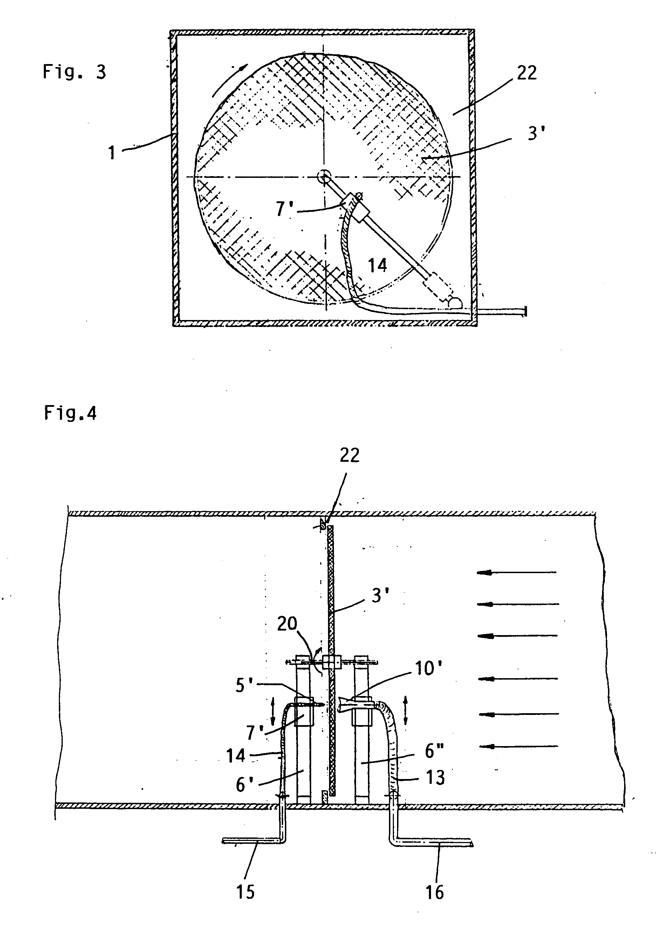

Die Vorrichtung hat ein Gehäuse 1 in Form eines Kanalstückes, dessen Querabmessung bzw. Durchmesser vorzugsweise grösser ist als derjenige des nichtdargestellten Strömungskanals, der die zu reinigende Luft führt und in dem die Vorrichtung montiert ist. Anstatt der dargestellten quadratischen Querschnittsform des Gehäuses 1 können auch andere Querschnittsformen vorgesehen sein, und insbesondere für das Ausführungsbeispiel nach Fig.3 und 4 wäre auch eine runde Querschnittsform geeignet. An der Wand des Gehäuses sind z.B. einen Innenflansch 2 aufweisende Mittel zum lösbaren Befestigen einer Filterscheibe 3 vorgesehen.

Die Filterscheiben 3,3′ können einen nichtdargestellten Umfangsrahmen haben, der das ebene Filtermaterial membranartig einfasst und der eine stabile Befestigung beispielweise durch Schrauben 4 gewährleistet. Als Filtermaterial können handelsübliche Filtermatten verwendet werden. Falls eine solche für die aufgrund der Erfindung intensive Reinigung nicht ausreichenden steif ist, kann sie durch eine an dem Rahmen befestigte und sich über sie erstreckende oder in ihr eingeschlossene Gitter- oder Speichenkonstruktion gestützt sein.

Für die periodische oder kontinuierliche Reinigung der Filterscheibe 3,3′ ist mit geringem Abstand zu ihr abströmseitig eine Düseneinrichtung 5 vorgesehen, die an einem auf einer Schlittenführung 6 sitzenden Schlitten 7 befestigt ist. Auf gleiche Weise ist zuströmseitig, d.h. auf der gegenüberliegenden Seite der Filterscheibe 3,3′, mindestens angenähert gleichachsig mit der Düseneinrichtung, eine Absaugeinrichtung 9 an einem auf einer Schlittenführung 10 sitzenden Schlitten 11 befestigt.

Für eine mechanisch intensive Reinigungswirkung eines gasförmigen oder flüssigen Reinigungsmittels hat die Düseneinrichtung 5,5′ einen entsprechend ausgebildeten Düsenkörper und ist mit hierfür optimalen geringen Abstand zu der Filterscheibe 3 angeordnet. Die Absaugeinrichtung 10, 10′ hat am freien Ende eines Rohrstutzens eine trichterförmige Erweiterung, um die durch die Düseneinrichtung 5,5′ aus der Filterscheibe 3,3′ herausgeblasenen oder herausgespritzten Verunreinigungen aufzufangen und sie anschliessend über die Schlauchleitung abzusaugen. Die mit der Düseneinrichtung 5,5′ und der Absaugeinrichtung 10,10′ verbundenen Schlauchleitungen 13,14 bilden durch ihre Flexibilität eine dauerhafte Verbindung zu fest installierten Rohrystemen 15,16. Das Rohrsystem 15 führt zu einer nichtdargestellten Pumpe oder zu einem Gebläse für die Erzeugung eines für das Ausspritzen oder Ausblasen von Verunreinigungen ausreichenden Strahldruckes der

2

Düseneinrichtung 5,5'. Das Rohrsystem 16 führt zu einer nicht dargestellten Saugvorrichtung mit Feststoffabscheider, die z.B. nach Art eines handelsüblichen Staubsaugers ausgeführt sein kann.

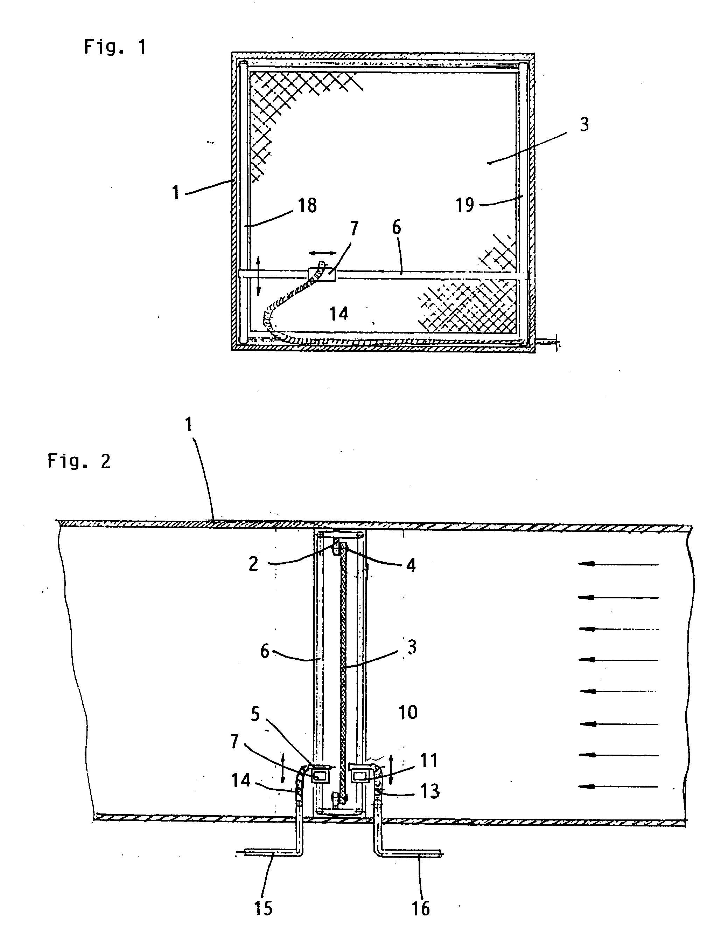

Beim Ausführungsbeispiel nach Fig.1 und 2 wird zusätzlich zu den Schlitten 7,11 jeweils auch die zugehörige Schlittenführung 6 in Richtung parallel zu einer der Seitenkanten der viereckigen Filterscheibe 3 verschoben, um die Düseneinrichtung 5 über die gesamte, für die Gasreinigung wirksame Fläche der Filterscheibe 3 zu führen. Hierfür ist die Schlittenführung 6 selbst an mindestens einer Führung 18,19 geführt.

Beim Ausführungsbeispiel nach Fig.3 und 4 ist. beidseitig zu der kreisförmigen Filterscheibe 3' nur je eine Schlittenführung 6', 6" vorgesehen. Um dennoch die gesamte wirksame Oberfläche der kreisrunden Filterscheibe 3' in den Wirkungsbereich der Düseneinrichtung 5' zu bringen, ist diese auf einer zentralen Welle 20 befestigt, die an den beiden Enden der Schlittenführungen 6',6" gelagert ist. Ihr nichtdargestellter Antrieb hat beispielsweise einen Zahnriemen. Eine an der Wand des Gehäuses 1 befestigte Blende 22 verhindert die Umströmung der Filterscheibe.

Für die translatorische Bewegung der Schlitten 7,7',11 sowie der Schlittenführungen 6 sind ebenfalls verschiedene bekannte Systeme, z.B. mit Zahnstange, Schraubenspindel, Zugkabel u.s.w. geeignet.

Die erfindungsgemässe Vorrichtung eignet sich beispielsweise für den Einbau in den Hauptkanal einer Klimaanlage oder für verfahrenstechnische Anlagen verschiedener Art.


**Patentansprüche**

1. Verfahren zum Entfernen von Feststoffpartikeln aus einem Gasstrom, wobei der Gasstrom durch eine quer zu ihm angeordnete Filterscheibe (3,3') geführt wird, dadurch gekennzeichnet, dass von der Filterscheibe (3,3') aufgenommene Feststoffpartikel durch mindestens einen entgegen der Richtung des zu reinigenden Gasstromes geführten Strahl eines flüssigen oder gasförmigen Mediums aus der Filterscheibe (3,3') entfernt und durch eine in seiner Richtung auf der anderen Seite der Filterscheibe angeordnete Absaugeinrichtung (10,10') fortgeführt werden, wobei mindestens eine den Strahl erzeugende Düseneinrichtung (5,5') und die Absaugeinrichtung (10,10') in geringem Abstand von der Filterscheibe (3,3') über diese synchron bewegt werden.

2. Verfahren nach Anspruch 1, dadurch gekennzeichnet, dass die mindestens eine Strahl- und Absaugeinrichtung (5,10) in zwei zueinander senkrechten Richtungen mit konstantem Abstand über die Oberfläche der Filterscheibe bewegt wird.

3. Verfahren nach Anspruch 1, dadurch gekennzeichnet, dass eine kreisrunde, um ihre Mitte drehbare Filterscheibe (3') während des Betriebs der mindestens einen strahlerzeugenden Düseneinrichtung (5') und der Absaugeinrichtung (10') in einer zwischen dem Zentrumsbereich der Filterscheibe (3') und ihrem Umfang verlaufenden Richtung, kontinuierlich gedreht wird.

4. Verfahren nach Anspruch 3, dadurch gekennzeichnet, dass die Filterscheibe (3') durch den Druck des mindestens einen Strahl des reinigenden Mediums gedreht wird.

5. Vorrichtung zur Ausführung des Verfahrens nach Anspruch 1, mit einer in einem Kanalstück (1) quer zur Strömungsrichtung angeordneten Filterscheibe (3,3'), gekennzeichnet durch eine Reinigungseinrichtung, mit mindestens einer relativ zu der Filterscheibe (3,3') abströmseitig angeordneten Düseneinrichtung (5,5') für die Zufuhr eines Reinigungsmittels, die am Ende einer Schlauchleitung (14) angeordnet ist und mit jeweils einer dieser gegenüberliegend auf der gegenüberliegenden Seite der Filterscheibe (3,3') am Ende einer zweiten Schlauchleitung (13) angeordneten Absaugeinrichtung (10,10'), wobei die Düsen- und Absaugeinrichtung synchron über die Oberfläche der Filterscheibe (3,3') bewegbar sind.

6. Vorrichtung nach Anspruch 5, gekennzeichnet, durch eine kreisrunde Form der Filterscheibe (3') mit einer ihre Drehung zulassenden Lagerung in ihrem mittleren Bereich, wobei die Düsen- und Absaugeinrichtung (5',10') durch eine Antriebseinrichtung vom Umfangsbereich bis zum mittleren Bereich der Filterscheibe beweglich sind.

7. Vorrichtung nach Anspruch 6, dadurch gekennzeichnet, dass die Filterscheibe (3') mit einem Drehantrieb verbunden ist.

8. Vorrichtung nach Anspruch 6, dadurch gekennzeichnet, dass die Filterscheibe (3') zumindest auf der der

3

Düseneinrichtung (5') zugekehrten Seite eine leitschaufelartige Feinprofilierung aufweist.

9. Vorrichtung nach Anspruch 5, dadurch gekennzeichnet, dass die Filterscheibe (3) durch zueinander parallele Kanten begrenzt ist, wobei die Düsen- und Absaugeinrichtung durch zwei Antriebseinrichtungen in zwei zueinander senkrechten Richtungen über die Filterscheibe (3) bewegbar ist.

Fig. 1

Fig. 2

Fig. 3

Fig.4

EP 0 497 732 A1

**Europäisches Patentamt**

# EUROPÄISCHER RECHERCHENBERICHT

Nummer der Anmeldung

EP 92 81 0034

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,,, X | DE-A-3 932 156 (M. KÖSTER ET AL.)<br><br>* das ganze Dokument *<br>--- | 1,2 | B01D46/42<br>B01D46/10<br>B01D46/12<br>A47L9/20 |
| Y | CA-A-1 219 709 (R. MCKAY ET AL.)<br>* das ganze Dokument *<br>--- | 1 | |
| Y | US-A-3 555 785 (J. E. WOOLDRIDGE ET AL.)<br>* das ganze Dokument * | 1 | |
| A | * Spalte 1, Zeile 30 - Spalte 1, Zeile 40 *<br>--- | 9 | |
| A | FR-A-1 562 986 (W. ROBINSON)<br>--- | | |
| A | US-A-4 157 251 (P. COLOMER)<br>--- | | |
| A | DE-A-1 407 956 (A. S. HALLAMORE)<br><br>----- | | |
| | | | **RECHERCHIERTE SACHGEBIETE (Int. Cl.5)**<br><br>B01D<br>A47L |

Der vorliegende Recherchenbericht wurde für alle Patentansprüche erstellt

| Recherchenort | Abschlußdatum der Recherche | Prüfer |
|---|---|---|
| DEN HAAG | 01 APRIL 1992 | PYFFEROEN K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................................
& : Mitglied der gleichen Patentfamilie, übereinstimmendes Dokument

EPO FORM 1503 03.82 (P0403)

7